# EUROPEAN PATENT APPLICATION

(11) **EP 4 757 104 A1**
(43) Date of publication of application: **10.06.2026**
(21) Application number: 25220666.9
(22) Date of filing: 04.12.2025
(51) Int. Cl.: H02J 3/38, H02J 4/25, H02J 9/00, H02J 9/06

(54) **BACKUP POWER SUPPLY SYSTEM AND STARTUP CONTROL METHOD THEREOF**

(30) Priority: 05.12.2024 CN 202411794387
(71) Applicant: Huawei Technologies Co., Ltd., Shenzhen, Guangdong 518129 (CN)
(72) Inventor: Zhang, Peng, Shenzhen 518129 (CN); Chen, Aitang, Shenzhen 518129 (CN); Tang, Qidi, Shenzhen 518129 (CN); Wang, Gang, Shenzhen 518129 (CN)
(74) Representative: Gill Jennings & Every LLP

(57) **Abstract**

This application provides a backup power supply system and a startup control method thereof. When an on/off-grid controller is powered off, a first control circuit provides a low level signal as an off-grid signal for a second control circuit of an inverter. In this way, when a voltage on a direct current side meets an inverter startup voltage value condition, the inverter preferentially performs an off-grid black start, and after the startup is complete, the inverter runs in off-grid mode and outputs an alternating current voltage to quickly supply power to a backup load. Before the inverter is started with off-grid mode and outputs the alternating current voltage, if it is detected that a voltage on an alternating current side meets a minimum off-grid output voltage value condition and a high level signal is received as an on-grid signal, the inverter may directly switch to on-grid startup, to complete quick startup. When a voltage of a power grid meets an undervoltage protection voltage value condition, the on/off-grid controller may directly start with on-grid mode and run in on-grid mode, turn on the first switch circuit, and send the high level signal as an on-grid signal, to quickly supply power to the backup load and provide a voltage for the alternating current side of the inverter.

## Description

### TECHNICAL FIELD

The present invention relates to the field of power electronics technologies, and in particular, to a backup power supply system and a startup control method thereof.

### BACKGROUND

A whole-house backup power supply system mainly includes an inverter and an on/off-grid controller, and can provide power supply in a plurality of manners such as photovoltaic modules, energy storage apparatuses, and power grids, to ensure stable power supply to home loads. Because a backup power supply system includes a plurality of power electronic devices such as an inverter and an on/off-grid controller, the power electronic devices need to coordinate and cooperate with each other to enable the backup power supply system to be quickly started and run stably, so as to supply power to a home load. To enable the backup power supply system to quickly supply continuous and stable power to the load, the backup power supply system needs to be quickly started under different power supply conditions, to supply power to the home load.

### SUMMARY

This application provides a backup power supply system and a startup control method thereof, to implement quick startup of the backup power supply system, to supply power to a home load.

According to a first aspect, this application provides a backup power supply system, including an inverter and an on/off-grid controller. The on/off-grid controller includes a first switch circuit and a first control circuit, and the inverter includes a second control circuit. A grid side of the first switch circuit is connected to a power grid, an inverter side of the first switch circuit is connected to an alternating current side of the inverter, a direct current side of the inverter is configured to connect to a direct current source, and the first control circuit is connected to the second control circuit. The first control circuit is configured to: when the on/off-grid controller is powered off, provide a low level signal for the second control circuit; and when the on/off-grid controller is powered on, detect whether a voltage of the power grid is less than or equal to an undervoltage protection voltage value and whether a voltage on the inverter side is greater than or equal to a minimum off-grid output voltage value. The undervoltage protection voltage value is usually set to a voltage value of the level-1 undervoltage protection point, for example, may be set to 0.7 Un, where Un is a rated voltage value of the power grid. The on/off-grid controller can run in on-grid mode only when the voltage of the power grid is greater than the undervoltage protection voltage. Once the voltage of the power grid is less than the undervoltage protection voltage, the on/off-grid controller cannot run in on-grid mode and can only switch to off-grid mode. The minimum off-grid output voltage value is a minimum voltage value output by the inverter running in off-grid mode, for example, 50 V may be selected. When the voltage on the inverter side of the on/off-grid controller is greater than or equal to the minimum off-grid output voltage value, it indicates that the inverter has completed off-grid startup and run in off-grid mode. If the voltage of the power grid is greater than the undervoltage protection voltage value and the voltage on the inverter side is less than the minimum off-grid output voltage value, the first switch circuit is turned on, and the high level signal is provided for the second control circuit; and if the voltage of the power grid is less than or equal to the undervoltage protection voltage value or the voltage on the inverter side is greater than or equal to the minimum off-grid output voltage value, the first switch circuit is turned off, and the low level signal is provided for the second control circuit. The second control circuit is configured to: when the inverter is powered on, detect whether the voltage on the direct current side meets an inverter startup voltage value. The inverter startup voltage value is a minimum voltage value on the direct current side at which the inverter can be started. For example, 120 V may be selected. If the voltage on the direct current side is greater than the inverter startup voltage value, it indicates that the inverter meets a startup condition. If a voltage on a direct current side is greater than an inverter startup voltage value, a voltage on an alternating current side is less than the minimum off-grid output voltage value, and the low level signal is received, controlling the inverter to run in off-grid mode; and if the voltage on the direct current side is greater than the inverter startup voltage value, the voltage on the alternating current side is greater than or equal to the minimum off-grid output voltage value, and the high level signal is received, controlling the inverter to run in on-grid mode.

In the backup power supply system in this application, corresponding on/off-grid startup conditions are set for the inverter and the on/off-grid controller. When the inverter and the on/off-grid controller respectively meet the corresponding startup conditions, the inverter and the on/off-grid controller may separately start with on-grid mode or start with off-grid mode, to quickly supply power to the backup load.

Specifically, in the backup power supply system in this application, the first control circuit may provide the low level signal as the off-grid signal for the second control circuit when the on/off-grid controller is powered off, that is, when the on/off-grid controller is not powered on, (that is, powered off), that is, when neither the inverter side nor the grid side of the on/off-grid controller supplies power. In this way, when the voltage on the direct current side meets an inverter startup voltage value condition, the inverter can preferentially perform an off-grid black start, and after the startup is complete, the inverter runs in off-grid mode and outputs an alternating current voltage to quickly supply power to a backup load. The inverter does not need to wait for a control signal that is sent by the on/off-grid controller or the system controller after the on/off-grid controller or the system controller is powered on and operates and that indicates an on-grid black start or the off-grid black start before performing a startup program. In the startup manner in this application, the inverter can be started with off-grid mode when a voltage on a direct current side meets a condition after the inverter is powered on, a startup speed is fast, and power can be quickly supplied to the backup load. In addition, after the inverter runs in off-grid mode, the inverter supplies power to the on/off-grid controller, so that the on/off-grid controller performs off-grid startup, keeps providing a low level signal as an off-grid signal, and turns off the first switch circuit, and the backup power supply system runs in off-grid mode. Before the inverter is started with off-grid mode and outputs the alternating current voltage, if it is detected that the voltage on the alternating current side of the inverter meets a minimum off-grid output voltage value condition and the high level signal is received as the on-grid signal, it indicates that the on/off-grid controller has been started to run to supply power to the backup load, and the inverter may directly switch to on-grid startup.

Specifically, in the backup power supply system in this application, when the voltage of the power grid meets the undervoltage protection voltage value condition, the on/off-grid controller may be directly started with on-grid mode, turn on the first switch circuit, and send a high level signal as an on-grid signal, to quickly supply power to the backup load and provide a voltage for the alternating current side of the inverter. In this case, if the voltage on the direct current side of the inverter meets the inverter startup voltage value condition, the inverter is started to run in on-grid mode, and the backup power supply system runs in on-grid mode. In the on/off-grid startup process of the on/off-grid controller, before the on/off-grid controller turns on the first switch circuit, if the on/off-grid controller detects that the voltage on the inverter side meets the minimum off-grid output voltage value condition, it indicates that the inverter has been started to run to supply power to the backup load, the on/off-grid controller may switch to off-grid startup. Subsequently, when the voltage of the power grid meets the on/off-grid condition, the off-grid mode can be switched to the on-grid mode.

In some embodiments of this application, the first control circuit includes a first control chip and a signal generation circuit. The signal generation circuit includes a second switch circuit and a first resistor, the second switch circuit and the first resistor are connected in series between a ground port and a signal output port, and the second switch circuit is in a turn-on state by default. When the first switch circuit in the on/off-grid controller is turned off, it indicates that the on/off-grid controller runs in off-grid mode, and the first control chip needs to turn on the second switch circuit, to cause the signal output port to output a low level signal, indicating off-grid. When the first switch circuit in the on/off-grid controller is turned on, it indicates that the on/off-grid controller runs in on-grid mode, and the first control chip needs to turn off the second switch circuit, to cause the signal output port to output a high level signal, indicating on-grid.

In some embodiments of this application, the second control circuit includes a second control chip and a signal detection circuit. The signal detection circuit includes: an optocoupler, a second resistor, a first power supply, and a second power supply, where a first end of the optocoupler is connected to the first power supply, a second end of the optocoupler is connected to a signal input port, the signal input port the signal detection circuit is connected to the signal output port of the signal generation circuit, a third end of the optocoupler is connected to the second power supply, a fourth end of the optocoupler is connected to an input end of the second control chip, and the second resistor is connected in series between the input end of the second control chip and a ground end. When the first switch circuit in the on/off-grid controller is turned off, it indicates that the on/off-grid controller runs in off-grid mode, and the first control chip needs to turn on the second switch circuit, to cause the signal output port to output a low level signal, indicating off-grid. At this time, the optocoupler in the signal detection circuit is connected, and the input end of the second control chip receives a high level signal, which indicates that an on/off-grid control instruction is off-grid. In this case, the inverter is started with off-grid mode, and the inverter is controlled to run in off-grid mode. When the first switch circuit in the on/off-grid controller is turned on, it indicates that the on/off-grid controller runs in on-grid mode, the first control chip needs to turn off the second switch circuit, and the optocoupler in the signal detection circuit is disconnected, to cause the signal output port to output a high level signal, indicating on-grid. At this time, the input end of the second control chip receives a low level signal, which indicates that an on/off-grid control instruction is on-grid. In this case, the inverter is started with on-grid mode, and the inverter is controlled to run in on-grid mode.

The foregoing circuit structure may implement, in hardware, that the first control circuit provides, by default, a low level signal as an off-grid signal when the on/off-grid controller is not powered on, so that the second control circuit controls, based on the off-grid signal, the inverter to be started with off-grid mode. The inverter runs in off-grid mode in a voltage source mode, and preferentially supplies power to the backup load.

In this application, the backup power supply system has two types of power supplies: a power grid and a direct current source. In this case, the voltage of the power grid is greater than the undervoltage protection voltage value, and the voltage on the direct current side of the inverter is greater than the inverter startup voltage value. In this case, the on/off-grid controller and the inverter separately perform respective startup procedures based on the foregoing conditions provided in this application. In a startup process, the inverter can determine, based on a voltage change on the alternating current side and an on/off-grid signal change, whether to switch the startup manner. The on/off-grid controller can determine, based on the voltage change, on the inverter side whether to switch the startup manner. In this way, the backup power supply system can adjust the startup manner based on the power supply change during startup to preferentially ensure the power supply to the backup load.

In some embodiments of this application, the voltage of the power grid is greater than the undervoltage protection voltage value and the voltage on the direct current side is greater than the inverter startup voltage value. The first control circuit is further configured to: when the on/off-grid controller is powered on, control the on/off-grid controller to be started with on-grid mode, and if the voltage on the inverter side is less than the minimum off-grid output voltage value, turn on the first switch circuit, and send the high level signal to the second control circuit, so that when the voltage on the direct current side is greater than the inverter startup voltage value, the second control circuit controls the inverter to run in on-grid mode; and if the voltage on the inverter side is greater than or equal to the minimum off-grid output voltage value, turn off the first switch circuit, and send the low level signal to the second control circuit.

When the on/off-grid controller is powered on, and the first control circuit detects that the voltage of the power grid meets the undervoltage protection voltage value condition, the on/off-grid controller is started with on-grid mode, and before the first switch circuit is turned on, whether the voltage on the inverter side meets the minimum off-grid output voltage value condition is detected. If the voltage on the inverter side is less than the minimum off-grid output voltage value, it indicates that the inverter has not completed off-grid startup and run in off-grid mode to supply power to the backup load. Therefore, the first control circuit turns on the first switch circuit, and sends the high level signal to the second control circuit as an on-grid signal; and the on/off-grid controller runs in on-grid mode, and supplies power to the backup load and the alternating current side of the inverter, so that when the voltage on the direct current side of the inverter is greater than the inverter startup voltage value, the second control circuit of the inverter controls the inverter to run in on-grid mode. In this way, the backup power supply system runs in on-grid mode. If the voltage on the inverter side is greater than or equal to the minimum off-grid output voltage value, it indicates that the inverter has completed off-grid startup and run in off-grid mode to supply power to the backup load. In this case, the first control circuit does not need to turn on the first switch circuit, keeps the first switch circuit turn off, and keeps providing a low level signal as an off-grid signal for the second control circuit, the on/off-grid controller runs in off-grid mode, and the backup power supply system runs in off-grid mode.

In some embodiments of this application, the voltage of the power grid is greater than the undervoltage protection voltage value and the voltage on the direct current side is greater than the inverter startup voltage value. The second control circuit is further configured to: when the inverter is powered on, receive the low level signal, control the inverter to be started with off-grid mode, and if the voltage on the alternating current side is less than the minimum off-grid output voltage value and the low level signal is received, control the inverter to run in off-grid mode; and if the voltage on the alternating current side is greater than or equal to the minimum off-grid output voltage value and the high level signal is received, control the inverter to run in on-grid mode.

When the inverter is powered on, the second control circuit directly receives the low level signal as an off-grid signal. When the second control circuit detects that the voltage on the direct current side meets the inverter startup voltage value condition, the inverter is started with off-grid mode, and the second control circuit detects whether the voltage on the alternating current side is greater than or equal to the minimum off-grid output voltage and whether the high level signal is received as the on-grid signal. Before the inverter is started with off-grid mode and outputs the alternating current voltage, if the voltage on the alternating current side is greater than or equal to the minimum off-grid output voltage value and the high level signal is received, it indicates that the on/off-grid controller has completed on-grid startup and run in on-grid mode to supply power to the backup load. In this way, the inverter is controlled to switch to running in on-grid mode, the backup power supply system runs in on-grid mode. After the off-grid inverter is started with off-grid mode, the inverter runs in off-grid mode to supply power to loads and the inverter side of the on/off-grid controller, and the on/off-grid controller runs in off-grid mode. In this way, the backup power supply system runs in off-grid mode.

In some embodiments of this application, if the voltage of the power grid is greater than the undervoltage protection voltage value and the voltage on the direct current side is less than or equal to the inverter startup voltage value, the first control circuit is further configured to: when the on/off-grid controller is powered on, turn on the first switch circuit, and send the high level signal to the second control circuit. When the backup power supply system is powered by only the power grid, the on/off-grid controller is powered on, and the first control circuit of the on/off-grid controller detects that the voltage of the power grid meets the undervoltage protection voltage value condition, the on/off-grid controller starts the grid side, turns on the first switch circuit, and runs in on-grid mode to supply power to the backup load and the alternating current side of the inverter. In addition, the first control circuit sends the high level signal to the second control circuit as the on-grid signal, so that subsequently, when the voltage on the direct current side of the inverter meets the inverter startup voltage value, the second control circuit controls the inverter to run in on-grid mode.

In some embodiments of this application, if the voltage on the direct current side is greater than the inverter startup voltage value and the voltage of the power grid is less than or equal to the undervoltage protection voltage value, the second control circuit is further configured to: when the inverter is powered on, control the inverter to run in off-grid mode. The backup power supply system is powered by only the direct current source. When the inverter is powered on, the second control circuit of the inverter directly receives the low level signal as an off-grid signal. When the second control circuit detects that the voltage on the direct current side meets the inverter startup voltage value condition, the inverter is started with off-grid mode, and the off-grid inverter is controlled to run in off-grid mode to supply power to the backup load and the inverter side of the on/off-grid controller.

In some embodiments of this application, a power cable and a signal cable are further included. The power cable is configured to connect the inverter side of the first switch circuit and the alternating current side of the inverter, and the signal cable is configured to connect the first control circuit and the second control circuit. The signal cable is independent of the power cable. This improves reliability of signal transmission. The signal cable is configured to transmit an on/off-grid control signal, and an off-grid signal may be transmitted without depending on a power status of the on/off-grid controller. Specifically, when the on/off-grid controller is not powered on, that is, powered off, the first control circuit may provide a low level signal as the off-grid signal for the second control circuit. In this way, the second control circuit controls, based on the off-grid signal, the inverter to be started with off-grid mode, and the inverter runs in off-grid mode and is in the voltage source mode, and preferentially supplies power to the backup load.

In some embodiments of this application, the on/off-grid controller includes a first power supply port, a second power supply port, an inverter-side port, and a grid-side port, the first power supply port is configured to connect to a backup load, the second power supply port is configured to connect to a non-backup load, the inverter-side port is connected to the alternating current side of the inverter, and the grid-side port is configured to connect to the power grid. The first switch circuit includes a first relay and a second relay that are connected in series, the first relay is separately connected to the first power supply port and the inverter-side port, and the second relay is separately connected to the second power supply port and the grid-side port, so that the backup load can supply power via the power grid or the inverter, and the non-backup load can supply power via the power grid.

According to a second aspect, this application provides a startup control method of a backup power supply system, including:
when an on/off-grid controller is powered off, providing a low level signal for a second control circuit of an inverter; and
when the on/off-grid controller is powered on, if a voltage of a power grid is greater than an undervoltage protection voltage value and a voltage on an inverter side of the on/off-grid controller is less than a minimum off-grid output voltage value, turning on a first switch circuit in the on/off-grid controller, and sending a high level signal to the second control circuit; and if the voltage of the power grid is less than or equal to the undervoltage protection voltage value or the voltage on the inverter side is greater than or equal to the minimum off-grid output voltage value, turning off the first switch circuit, and sending the low level signal to the second control circuit; and
when the inverter is powered on, if a voltage on a direct current side is greater than an inverter startup voltage value, a voltage on an alternating current side is less than the minimum off-grid output voltage value, and the low level signal is received, controlling the inverter to run in off-grid mode; and if the voltage on the direct current side is greater than the inverter startup voltage value, the voltage on the alternating current side is greater than or equal to the minimum off-grid output voltage value, and the high level signal is received, controlling the inverter to run in on-grid mode.

In some embodiments of this application, the method further includes:
if the voltage of the power grid is greater than the undervoltage protection voltage value and the voltage on the direct current side is greater than the inverter startup voltage value, when the on/off-grid controller is powered on, controlling the on/off-grid controller to be started with on-grid mode, and if the voltage on the inverter side is less than the minimum off-grid output voltage value, turning on the first switch circuit, and sending the high level signal to the second control circuit, so that when the voltage on the direct current side is greater than the inverter startup voltage value, the second control circuit controls the inverter to run in on-grid mode; and if the voltage on the inverter side is greater than or equal to the minimum off-grid output voltage value, turning off the first switch circuit, and sending the low level signal to the second control circuit.

In some embodiments of this application, the method further includes:
if the voltage of the power grid is greater than the undervoltage protection voltage value and the voltage on the direct current side is greater than the inverter startup voltage value, when the inverter is powered on, receiving the low level signal, controlling the inverter to be started with off-grid mode, and if the voltage on the alternating current side is less than the minimum off-grid output voltage value and the low level signal is received, controlling the inverter to run in off-grid mode; and if the voltage on the alternating current side is greater than or equal to the minimum off-grid output voltage value and the high level signal is received, controlling the inverter to run in on-grid mode.

In some embodiments of this application, the method further includes:
if the voltage of the power grid is greater than the undervoltage protection voltage value and the voltage on the direct current side is less than or equal to the inverter startup voltage value, when the on/off-grid controller is powered on, turning on the first switch circuit, and sending the high level signal to the second control circuit.

In some embodiments of this application, the method further includes:
if the voltage on the direct current side is greater than the inverter startup voltage value and the voltage of the power grid is less than or equal to the undervoltage protection voltage value, when the inverter is powered on, controlling the inverter to run in off-grid mode.

### BRIEF DESCRIPTION OF DRAWINGS

FIG. 1 is a diagram of a structure of a backup power supply system;
FIG. 2 is a diagram of a structure of a backup power supply system according to an embodiment of this application;
FIG. 3a is a schematic of a circuit structure of a single-phase on/off-grid controller according to an embodiment of this application;
FIG. 3b is a schematic of a circuit structure of a three-phase on/off-grid controller according to an embodiment of this application;
FIG. 4 is a schematic of a circuit structure of a backup power supply system according to an embodiment of this application;
FIG. 5 is a schematic flowchart of a startup control method of a backup power supply system on a side of an on/off-grid controller according to an embodiment of this application;
FIG. 6 is a schematic flowchart of a startup control method of a backup power supply system on a side of an inverter according to an embodiment of this application; and
FIG. 7A and FIG. 7B are a schematic flowchart of a startup control method of a backup power supply system according to an embodiment of this application.

### DESCRIPTION OF EMBODIMENTS

To make the objectives, technical solutions, and advantages of this application clearer, the following further describes this application in detail with reference to accompanying drawings. However, example implementations may be implemented in a plurality of forms and should not be construed as being limited to implementations described herein. On the contrary, these implementations are provided such that this application is more comprehensive and complete and fully conveys the concept of the example implementations to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that specific details are set forth in the following descriptions for ease of fully understanding this application. However, this application can be implemented in a plurality of manners different from those described herein, and a person skilled in the art can perform similar promotion without departing from the connotation of this application. Therefore, this application is not limited to the following disclosed specific implementations. The following descriptions of this specification are example implementations of implementing this application. However, the descriptions are intended to describe the general principle of this application, and are not intended to limit the scope of this application. The protection scope of this application shall be defined by the appended claims.

To facilitate understanding of embodiments of this application, the following first describes related technologies in embodiments of this application.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, statements such as "in an embodiment", "in some implementations", and "in other implementations" that appear at different places in this specification do not necessarily mean referring to a same embodiment. Instead, the statements mean "one or more but not all of embodiments", unless otherwise specifically emphasized in another manner. The terms "include", "have", and variants of the terms all mean "include but are not limited to", unless otherwise specifically emphasized in another manner.

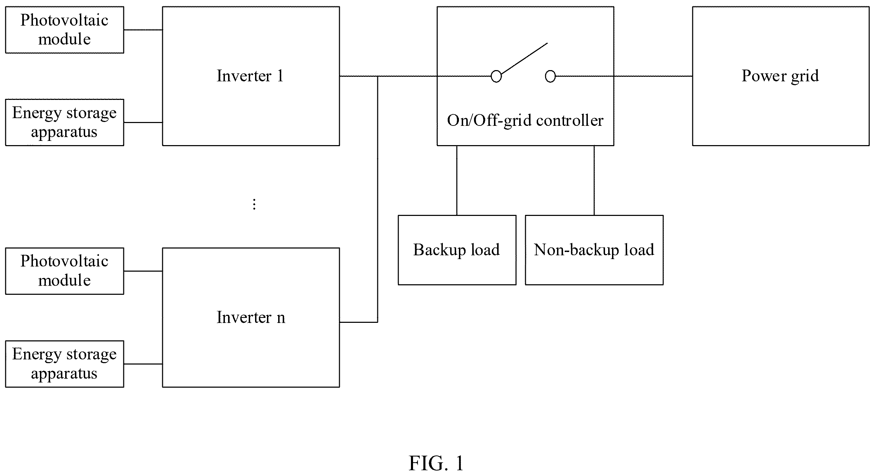

Refer to FIG. 1. The backup power supply system mainly includes an inverter and an on/off-grid controller. The on/off-grid controller is connected between the inverter and a power grid, and the inverter is configured to convert a direct current provided by the photovoltaic module or an energy storage apparatus into an alternating current. The on/off-grid controller includes: a first power supply port, a second power supply port, an inverter-side port, and a grid-side port, where the first power supply port is directly connected to the inverter-side port, the second power supply port is directly connected to the grid-side port, the inverter-side port is connected to the alternating current side of the inverter, and the grid-side port is configured to connect to the power grid. A plurality of inverters may be disposed in the backup power supply system. Correspondingly, the on/off-grid controller may be provided with inverter-side ports that are in a one-to-one correspondence with alternating current sides of the inverters. Home loads connected to the on/off-grid controller include a backup load and a non-backup load. The first power supply port is configured to connect to the backup load, and the second power supply port is configured to connect to the non-backup load. The backup load may be powered via a power grid or an inverter, and the non-backup load is powered via the power grid.

The on/off-grid controller includes a control chip and a relay. The control chip controls turn-on/turn-off of the relay to implement on/off-grid switching of the inverter. When the power grid is normal, the control chip controls the relay to be turned on, and the backup power supply system runs in on-grid mode to supply power to the backup load; and when the power grid fails, the control chip controls the relay to be turned off, and the inverter runs in off-grid mode and supplies power to the backup load. In this way, the backup load can always run properly.

Based on power supply conditions when the backup power supply system is started, the backup power supply system can be started in two manners. In one manner, when a voltage of the power grid meets a threshold condition, the backup power supply system starts the grid side and runs in on-grid mode. In the other manner, when a direct current voltage provided by the photovoltaic module or the energy storage apparatus meets a threshold condition, the backup power supply system performs a black start on the inverter side and runs in off-grid mode.

Currently, the startup manners of the backup power supply system are as follows: During power-on, the on/off-grid controller directly performs on-grid or off-grid startup according to a communication instruction; after the relay is turned on or off, the on/off-grid controller sends a corresponding startup signal to the inverter; and the inverter starts based on a detection result on the alternating current side, and outputs an alternating current. In this solution, when the on/off-grid controller is started with off-grid mode, the backup load can be powered only after the inverter is started. As a result, continuous and stable power supply cannot be quickly provided to the load. In addition, if power supply changes in a startup process of the backup power supply system in a specific manner, and if the startup manner cannot be adjusted in time, startup cannot be completed as soon as possible to ensure power supply to the backup load, also affecting user experience.

Based on this, according to the backup power supply system and a startup control method thereof provided in embodiments of this application, the backup power supply system can be quickly started, to provide continuous and stable power supply for the backup load. In addition, if the power supply changes in the startup process of the backup power supply system, the startup manner can be switched in time to ensure power supply to the backup load.

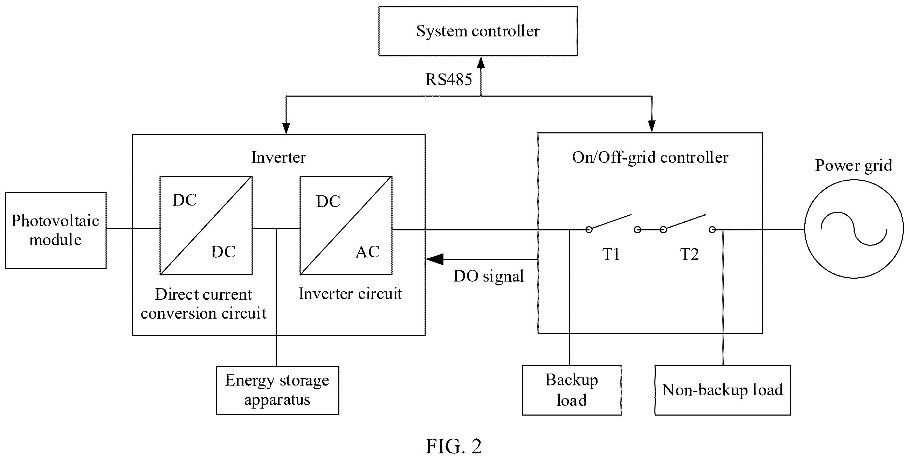

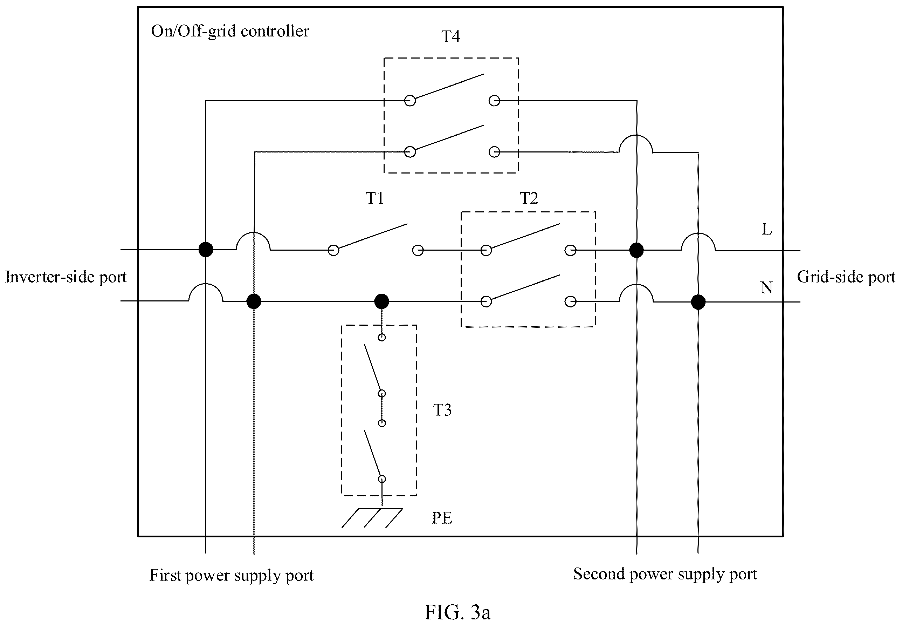

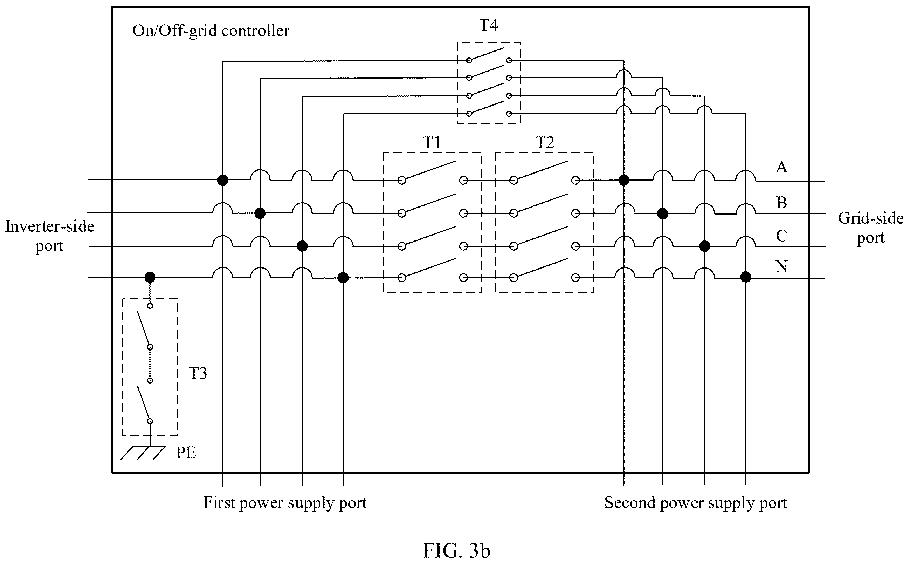

Refer to FIG. 2. A backup power supply system provided in this embodiment of this application includes an inverter and an on/off-grid controller. The backup power supply system may further include a system controller, mainly configured to perform functions such as system communication transmission, power scheduling, and information reporting. Generally, the system controller is connected to the inverter and the on/off-grid controller through one RS485 communication cable. The inverter is connected between a direct current source and the on/off-grid controller. A direct current side of the inverter is configured to connect to the direct current source. The direct current source may be specifically a photovoltaic module, or the direct current source may be an energy storage apparatus. An alternating current side of the inverter is connected to an inverter side of the on/off-grid controller. The inverter is configured to convert a direct current provided by the photovoltaic module or the energy storage apparatus into an alternating current. The inverter may specifically include an inverter circuit, and may further include a direct current conversion circuit. The direct current conversion circuit is configured to perform power conversion on a direct current provided by the photovoltaic module. The inverter circuit is configured to convert a direct current provided by the direct current conversion circuit or a direct current provided by the energy storage apparatus into an alternating current. The on/off-grid controller may specifically include a first switch circuit. A grid side of the first switch circuit is configured to connect to a power grid, and an inverter side of the first switch circuit is connected to the alternating current side of the inverter. To meet a power consumption safety requirement, the first switch circuit usually includes two levels of switches, that is, a first relay T1 and a second relay T2 that are connected in series. Refer to FIG. 3a and FIG. 3b. The on/off-grid controller generally includes four ports, which are specifically a first power supply port, a second power supply port, an inverter-side port, and a grid-side port. The first power supply port is configured to connect to a backup load, the second power supply port is configured to connect to a non-backup load, the inverter-side port is configured to connect to an alternating current side of the inverter, the grid-side port is configured to connect to a power grid, the first relay T1 is separately connected to the first power supply port and the inverter-side port, and the second relay T2 is separately connected to the second power supply port and the grid-side port. A plurality of inverters may be disposed in the backup power supply system. Correspondingly, the on/off-grid controller may be provided with inverter-side ports that are in a one-to-one correspondence with alternating current sides of the inverters. As shown in FIG. 3a, the on/off-grid controller provided in this application may be a single-phase on/off-grid controller. Alternatively, as shown in FIG. 3b, the on/off-grid controller provided in this application may be a three-phase on/off-grid controller. In addition, the on/off-grid controller may further include an NPE relay T3 connected between a neutral wire N and a protective earth PE, and a bypass switch T4 connected between the inverter-side port and the grid-side port.

The on/off-grid controller further includes a first control circuit, the inverter further includes a second control circuit, and the first control circuit is connected to the second control circuit. The first control circuit and the second control circuit may be connected through a signal cable independent of a power cable, to improve signal transmission reliability. The power cable is a cable connected between an inverter side of the first switch circuit and an alternating current side of the inverter. The signal cable is used to transmit on/off-grid control signals, and transmission of off-grid signals does not depend on a power status of the on/off-grid controller. Specifically, when the on/off-grid controller is not powered on, that is, powered off, to be specific, neither the inverter side nor the grid side of the on/off-grid controller supplies power, the first control circuit may provide a low level signal as an off-grid signal for the second control circuit. In this way, the second control circuit controls, based on the off-grid signal, the inverter to be started with off-grid mode, and the inverter runs in voltage source mode and preferentially supplies power to the backup load. When the on/off-grid controller is powered on, based on a condition that the voltage of the power grid meets, the first control circuit may provide a high level signal as the on-grid signal for the second control circuit, or provide a low level signal as the off-grid signal for the second control circuit, so that the second control circuit controls, based on the on-grid signal, the inverter to run in on-grid mode and be in current source mode, or controls, based on the off-grid signal, the inverter to run in off-grid mode and operate in voltage source mode.

When there are a plurality of inverters in the backup power supply system, each inverter is connected to a corresponding inverter-side port of the on/off-grid controller through a corresponding power cable, and a second control circuit of each inverter is connected to a first control circuit of the on/off-grid controller through a corresponding signal cable.

In this application, in terms of hardware design, to enable the first control circuit to provide, by default, a low level signal as an off-grid signal when the on/off-grid controller is not powered on, a signal generation circuit configured to output the on/off-grid signal may be disposed in the first control circuit. Correspondingly, a signal detection circuit configured to receive an on/off-grid signal is disposed in the second control circuit.

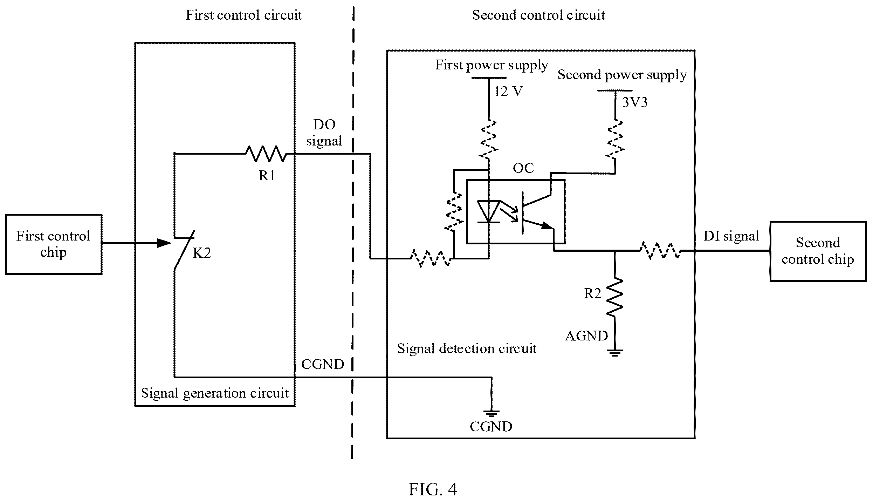

Refer to FIG. 4. The first control circuit specifically includes a first control chip and a signal generation circuit, and the second control circuit includes a second control chip and a signal detection circuit. The signal generation circuit specifically includes a second switch circuit K2 and a first resistor R1. The second switch circuit K2 and the first resistor R1 are connected in series between a ground port CGND and a signal output port. The second switch circuit K2 is in a turn-on state by default, and the second switch circuit K2 may specifically use a relay whose contact is normally closed. The signal output port may provide a digital output (DO) signal. When the second switch circuit K2 is in a turn-on state by default, the ground port CGND and the signal output port form a path, and the DO signal is a low level signal, indicating off-grid. After the first control chip controls the second switch circuit K2 to be turned off, the signal output port provides a high level signal, that is, the DO signal is a high level signal, indicating on-grid. Correspondingly, the signal detection circuit specifically includes an optocoupler OC, a second resistor R2, a first power supply, and a second power supply. A first end of the optocoupler OC is connected to the first power supply, the first power supply may be, for example, a 12 V power supply, a second end of the optocoupler OC is connected to a signal input port, the signal input port of the signal detection circuit is connected to a signal output port of the signal generation circuit, the signal input port is configured to receive the DO signal, a third end of the optocoupler OC is connected to the second power supply, the second power supply may be, for example, a 3.3 V power supply, a fourth end of the optocoupler OC is connected to an input end of the second control chip, the second resistor is connected in series between the input end of the second control chip and a ground end AGND, and the input end of the second control chip is configured to receive a digital input (digital input, DI) signal. Optionally, another resistor may be disposed on a line between the ground port CGND and the signal output port in the signal generation circuit, and another resistor may also be disposed on a line between the signal input port and the input end of the second control chip in the signal detection circuit, for example, a resistor shown by a dashed line in FIG. 4.

When the first switch circuit in the on/off-grid controller is turned off, it indicates that the on/off-grid controller runs in off-grid mode, and the first control chip needs to turn on the second switch circuit K2, to cause the signal output port to output a DO signal as a low level signal, indicating off-grid. At this time, the optocoupler OC in the signal detection circuit is connected, and the input end of the second control chip receives a high-level DI signal, which indicates that an on/off-grid control instruction is off-grid. In this case, the inverter is started with off-grid mode, and the inverter is controlled to run in off-grid mode. When the first switch circuit in the on/off-grid controller is turned on, it indicates that the on/off-grid controller runs in on-grid mode, the first control chip needs to turn off the second switch circuit K2, and the optocoupler OC in the signal detection circuit is disconnected, to cause the signal output port to output a DO signal as a high level signal, indicating on-grid. At this time, the input end of the second control chip receives a low-level DI signal, which indicates that an on/off-grid control instruction is on-grid. In this case, the inverter is started with on-grid mode, and the inverter is controlled to run in on-grid mode.

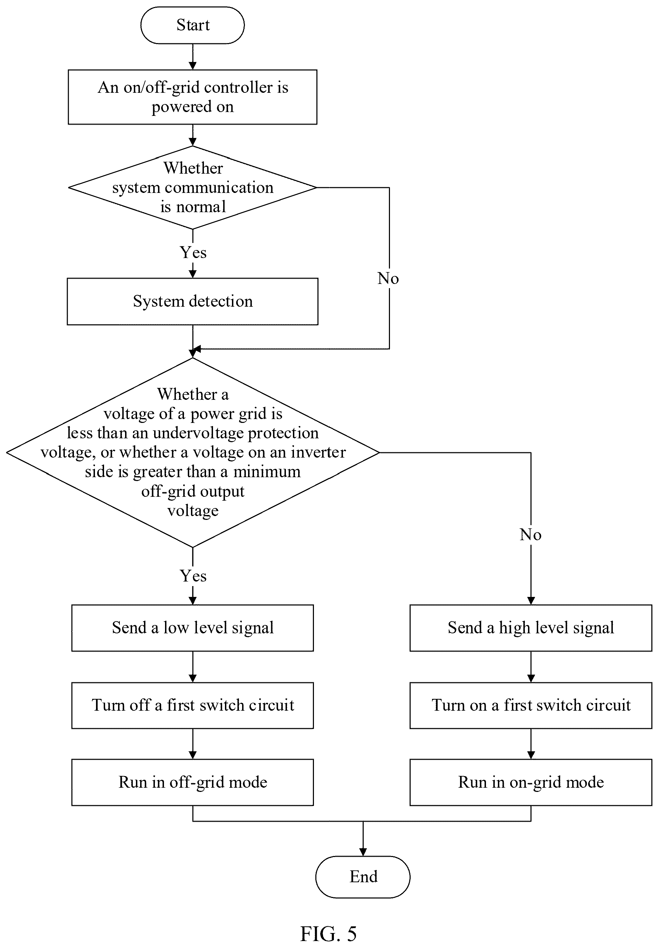

Refer to FIG. 5. When the on/off-grid controller is powered on, the first control circuit may detect whether the voltage of the power grid is less than or equal to an undervoltage protection voltage value and whether a voltage on the inverter side is greater than or equal to a minimum off-grid output voltage value. The undervoltage protection voltage value is usually set to a voltage value of the level-1 undervoltage protection point, for example, may be set to 0.7 Un, where Un is a rated voltage value of the power grid. The on/off-grid controller can run in on-grid mode only when the voltage of the power grid is greater than the undervoltage protection voltage. Once the voltage of the power grid is less than the undervoltage protection voltage, the on/off-grid controller cannot run in on-grid mode and can only switch to off-grid mode. The minimum off-grid output voltage value is a minimum voltage value output by the inverter running in off-grid mode, for example, 50 V may be selected. When the voltage on the inverter side of the on/off-grid controller is greater than or equal to the minimum off-grid output voltage value, it indicates that the inverter has completed off-grid startup and run in off-grid mode. If the voltage of the power grid is less than or equal to the undervoltage protection voltage value or the voltage on the inverter side is greater than or equal to the minimum off-grid output voltage value, the first control circuit turns off the first switch circuit, and keeps providing the low level signal as an off-grid signal for the second control circuit, and the on/off-grid controller runs in off-grid mode. In this case, the backup power supply system runs in off-grid mode to supply power to the backup load. If the voltage of the power grid is greater than the undervoltage protection voltage value and the voltage on the inverter side is less than the minimum off-grid output voltage value, the first switch circuit is turned on, and the high level signal is provided for the second control circuit, so that the on/off-grid controller runs in on-grid mode. In this case, if the voltage on the direct current side of the inverter meets an inverter startup voltage value condition, the inverter also runs in on-grid mode, so that the backup power supply system is in on-grid mode to supply power to the backup load.

Refer to FIG. 5. Optionally, when the on/off-grid controller is powered on, whether communication with the inverter is normal may first be determined. If the communication is normal, related system detection is performed. If the communication is abnormal, the system detection is skipped, and preparation for power supply to the backup load is preferentially initiated.

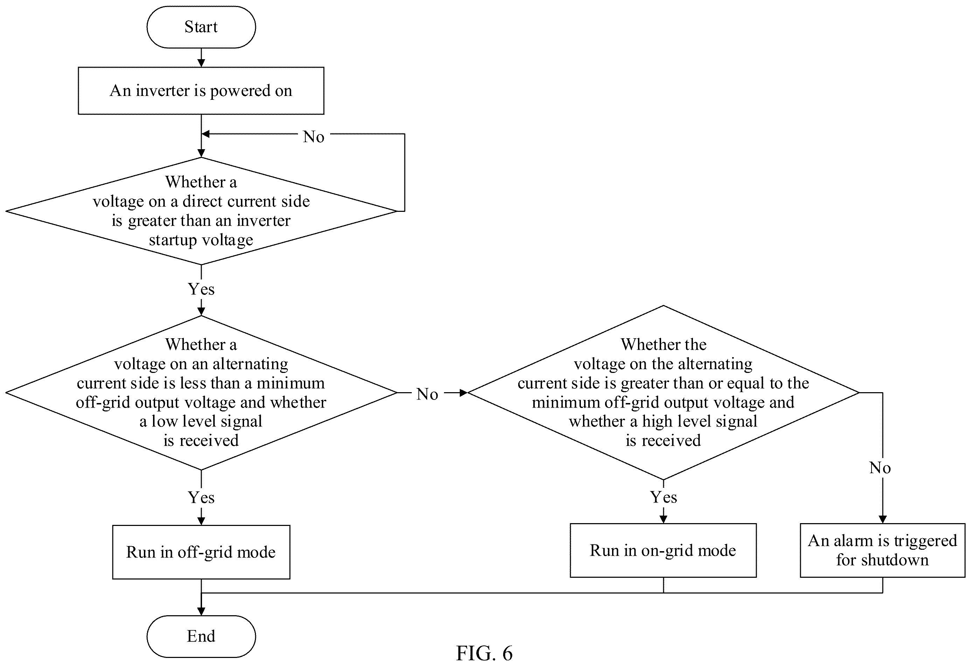

Refer to FIG. 6. When the inverter is powered on, the second control circuit may detect whether the voltage on the direct current side meets the inverter startup voltage value condition. If the voltage on the direct current side is greater than the inverter startup voltage value, the inverter startup voltage value is a minimum voltage value on the direct current side at which the inverter can be started. For example, 120 V may be selected, it indicates that the inverter meets the startup condition, and the second control circuit detects whether the voltage on the alternating current side is less than the minimum off-grid output voltage value and whether a low level signal is received as the off-grid signal. If the voltage on the alternating current side is less than the minimum off-grid output voltage value and a low level signal is received, the second control circuit controls the inverter to run in off-grid mode to supply power to the on/off-grid controller and the backup load. If the voltage on the alternating current side is greater than or equal to the minimum off-grid output voltage value and the high level signal is received and used as the on-grid signal, it indicates that the on/off-grid controller has run in on-grid mode to supply power to the backup load, and the second control circuit controls the inverter to run in on-grid mode. If another detection result is obtained, for example, the voltage on the alternating current side is less than the minimum off-grid output voltage value and a low level signal is received, it indicates that the DO signal does not match a running status of the on/off-grid controller, and an alarm is triggered for shutdown.

In the backup power supply system in this application, the first control circuit may provide the low level signal as the off-grid signal for the second control circuit when the on/off-grid controller is not powered on, that is, powered off. In this way, when the voltage on the direct current side meets the inverter startup voltage value condition, the inverter can preferentially perform an off-grid black start, and after the startup is complete, the inverter runs in off-grid mode and outputs an alternating current voltage to quickly supply power to a backup load. In addition, after the inverter runs in off-grid mode, the inverter supplies power to the on/off-grid controller, so that the on/off-grid controller performs off-grid startup, keeps providing a low level signal as an off-grid signal, and turns off the first switch circuit, and the backup power supply system runs in off-grid mode. Before the inverter is started with off-grid mode and outputs the alternating current voltage, if it is detected that a voltage on the alternating current side of the inverter meets the minimum off-grid output voltage value condition and the high level signal is received as an on-grid signal, the inverter may directly switch to on-grid startup.

In the backup power supply system in this application, when a voltage of a power grid meets an undervoltage protection voltage value condition, the on/off-grid controller may directly start with on-grid mode and run in on-grid mode, turn on the first switch circuit, and send the high level signal as an on-grid signal, to quickly supply power to the backup load and provide a voltage for the alternating current side of the inverter. In this case, if the voltage on the direct current side of the inverter meets the inverter startup voltage value condition, the inverter is started to run in on-grid mode, and the backup power supply system runs in on-grid mode. In the on/off-grid startup process of the on/off-grid controller, before the on/off-grid controller turns on the first switch circuit, if the on/off-grid controller detects that the voltage on the inverter side meets the minimum off-grid output voltage value condition, the on/off-grid controller may switch to off-grid startup. Subsequently, when the voltage of the power grid meets the on/off-grid condition, the off-grid mode can be switched to the on-grid mode.

Specifically, when the backup power supply system provided in this application is started, there are the following several power supply cases:
1. The backup power supply system is powered by only the power grid. In this case, the voltage of the power grid is greater than the undervoltage protection voltage value, and the voltage on the direct current side of the inverter is less than or equal to the inverter startup voltage value. When the on/off-grid controller is powered on, and the first control circuit of the on/off-grid controller detects that the voltage of the power grid meets the undervoltage protection voltage value condition, the on/off-grid controller starts the grid side, turns on the first switch circuit, and runs in on-grid mode, to supply power to the backup load and the alternating current side of the inverter. In addition, the first control circuit sends the high level signal to the second control circuit as the on-grid signal, so that subsequently, when the voltage on the direct current side of the inverter meets the inverter startup voltage value, the second control circuit controls the inverter to run in on-grid mode.
2. The backup power supply system is powered by only the direct current source. In this case, the voltage on the direct current side is greater than the inverter startup voltage value, and the voltage of the power grid is less than or equal to the undervoltage protection voltage value. When the inverter is powered on, the second control circuit of the inverter directly receives the low level signal as the off-grid signal. When the second control circuit detects that the voltage on the direct current side meets the inverter startup voltage value condition, the inverter is started with off-grid mode, and the off-grid inverter is controlled to run in off-grid mode to supply power to the backup load and the inverter side of the on/off-grid controller.
3. The backup power supply system has two types of power supplies: a power grid and a direct current source. In this case, the voltage of the power grid is greater than the undervoltage protection voltage value, and the voltage on the direct current side of the inverter is greater than the inverter startup voltage value. In this case, the on/off-grid controller and the inverter separately perform respective startup procedures based on the foregoing conditions provided in this application. In a startup process, the inverter can determine, based on a voltage change on the alternating current side and a DO signal change, whether to switch the startup manner. The on/off-grid controller can determine, based on the voltage change, on the inverter side whether to switch the startup manner. In this way, the backup power supply system can adjust the startup manner based on the power supply change during startup to preferentially ensure the power supply to the backup load. The detailed switchover process is as follows:

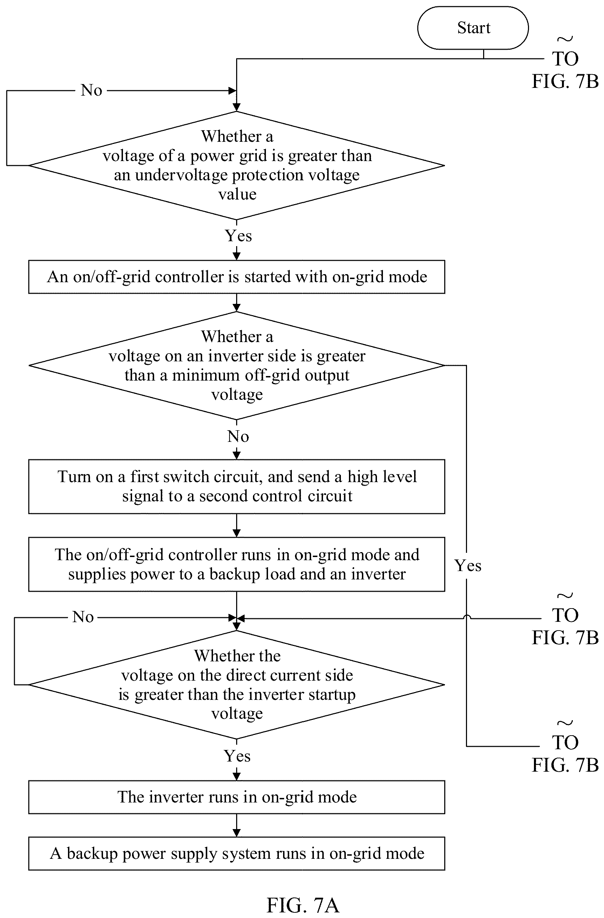

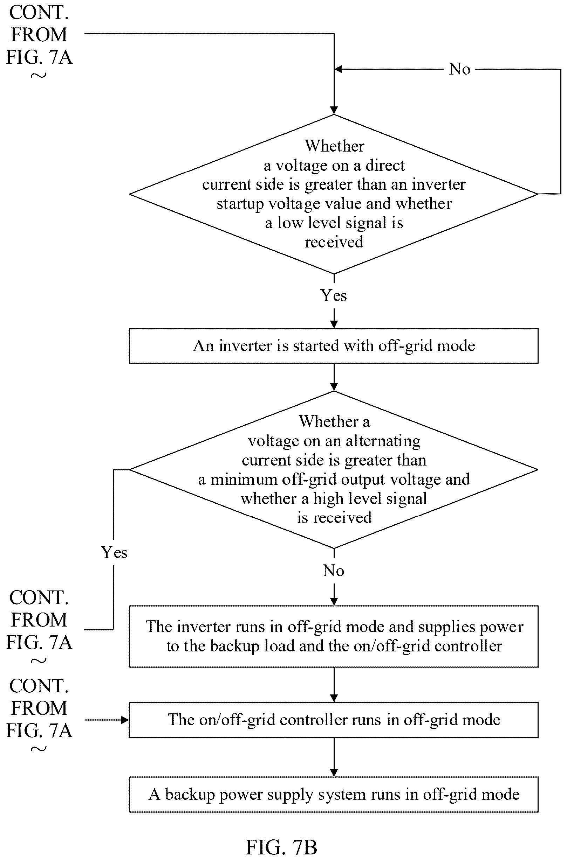

Refer to FIG. 7A and FIG. 7B. When the on/off-grid controller is powered on, and the first control circuit detects that the voltage of the power grid meets the undervoltage protection voltage value condition, the on/off-grid controller is started with on-grid mode, and before the first switch circuit is turned on, whether the voltage on the inverter side meets the minimum off-grid output voltage value condition is detected. If the voltage on the inverter side is less than the minimum off-grid output voltage value, it indicates that the inverter has not completed off-grid startup and run in off-grid mode to supply power to the backup load. Therefore, the first control circuit turns on the first switch circuit, and sends the high level signal to the second control circuit as an on-grid signal; and the on/off-grid controller runs in on-grid mode, and supplies power to the backup load and the alternating current side of the inverter, so that when the voltage on the direct current side of the inverter is greater than the inverter startup voltage value, the second control circuit of the inverter controls the inverter to run in on-grid mode. In this way, the backup power supply system runs in on-grid mode. If the voltage on the inverter side is greater than or equal to the minimum off-grid output voltage value, it indicates that the inverter has completed off-grid startup and run in off-grid mode to supply power to the backup load. In this case, the first control circuit does not need to turn on the first switch circuit, keeps the first switch circuit turn off, and keeps providing a low level signal as an off-grid signal for the second control circuit, the on/off-grid controller runs in off-grid mode, and the backup power supply system runs in off-grid mode.

Refer to FIG. 7A and FIG. 7B. When the inverter is powered on, the second control circuit directly receives the low level signal as an off-grid signal. When the second control circuit detects that the voltage on the direct current side meets the inverter startup voltage value condition, the inverter is started with off-grid mode, and the second control circuit detects whether the voltage on the alternating current side is greater than or equal to the minimum off-grid output voltage and whether the high level signal is received as the on-grid signal. Before the inverter is started with off-grid mode and outputs the alternating current voltage, if the voltage on the alternating current side is greater than or equal to the minimum off-grid output voltage value and the high level signal is received, it indicates that the on/off-grid controller has completed on-grid startup and run in on-grid mode to supply power to the backup load. In this way, the inverter is controlled to switch to running in on-grid mode, the backup power supply system runs in on-grid mode. Optionally, before the inverter is controlled to switch to running in on-grid mode, whether the voltage on the direct current side of the inverter meets the inverter startup voltage value condition may be further determined again. After it is determined that the voltage on the direct current side is greater than the inverter startup voltage value, the inverter switches to running in on-grid mode. Before the inverter is started with off-grid mode and starts to output an alternating current voltage, if a voltage on an alternating current side is less than the minimum off-grid output voltage value or the low level signal is always received, the inverter runs in off-grid mode to supply power to a load and an inverter side of the on/off-grid controller, and the on/off-grid controller runs in off-grid mode. In this case, the backup power supply system runs in off-grid mode.

Based on a same inventive concept, this application further provides a startup control method of the backup power supply system, including the following steps:
when an on/off-grid controller is powered off, providing a low level signal for a second control circuit of an inverter;
when the on/off-grid controller is powered on, if a voltage of a power grid is greater than an undervoltage protection voltage value and a voltage on an inverter side of the on/off-grid controller is less than a minimum off-grid output voltage value, turning on a first switch circuit in the on/off-grid controller, and sending a high level signal to the second control circuit; and if the voltage of the power grid is less than or equal to the undervoltage protection voltage value or the voltage on the inverter side is greater than or equal to the minimum off-grid output voltage value, turning off the first switch circuit, and sending the low level signal to the second control circuit; and
when the inverter is powered on, if a voltage on a direct current side is greater than an inverter startup voltage value, a voltage on an alternating current side is less than the minimum off-grid output voltage value, and the low level signal is received, controlling the inverter to run in off-grid mode; and if the voltage on the direct current side is greater than the inverter startup voltage value, the voltage on the alternating current side is greater than or equal to the minimum off-grid output voltage value, and the high level signal is received, controlling the inverter to run in on-grid mode.

In some embodiments of this application, the method further includes:
if the voltage of the power grid is greater than the undervoltage protection voltage value and the voltage on the direct current side is greater than the inverter startup voltage value, when the on/off-grid controller is powered on, controlling the on/off-grid controller to be started with on-grid mode, and if the voltage on the inverter side is less than the minimum off-grid output voltage value, turning on the first switch circuit, and sending the high level signal to the second control circuit, so that when the voltage on the direct current side is greater than the inverter startup voltage value, the second control circuit controls the inverter to run in on-grid mode; and if the voltage on the inverter side is greater than or equal to the minimum off-grid output voltage value, turning off the first switch circuit, and sending the low level signal to the second control circuit.

In some embodiments of this application, the method further includes:
if the voltage of the power grid is greater than the undervoltage protection voltage value and the voltage on the direct current side is greater than the inverter startup voltage value, when the inverter is powered on, receiving the low level signal, controlling the inverter to be started with off-grid mode, and if the voltage on the alternating current side is less than the minimum off-grid output voltage value and the low level signal is received, controlling the inverter to run in off-grid mode; and if the voltage on the alternating current side is greater than or equal to the minimum off-grid output voltage value and the high level signal is received, controlling the inverter to run in on-grid mode.

In some embodiments of this application, the method further includes:
if the voltage of the power grid is greater than the undervoltage protection voltage value and the voltage on the direct current side is less than or equal to the inverter startup voltage value, when the on/off-grid controller is powered on, turning on the first switch circuit, and sending the high level signal to the second control circuit.

In some embodiments of this application, the method further includes:
if the voltage on the direct current side is greater than the inverter startup voltage value and the voltage of the power grid is less than or equal to the undervoltage protection voltage value, when the inverter is powered on, controlling the inverter to run in off-grid mode.

This application provides the backup power supply system and the startup control method thereof. When an on/off-grid controller is powered off, a first control circuit provides a low level signal as an off-grid signal for a second control circuit of an inverter. In this way, when a voltage on a direct current side meets an inverter startup voltage value condition, the inverter preferentially performs an off-grid black start, and after the startup is complete, the inverter runs in off-grid mode and outputs an alternating current voltage to quickly supply power to a backup load. Before the inverter is started with off-grid mode and outputs the alternating current voltage, if it is detected that a voltage on an alternating current side meets a minimum off-grid output voltage value condition and a high level signal is received as an on-grid signal, the inverter may directly switch to on-grid startup, to complete quick startup. When a voltage of a power grid meets an undervoltage protection voltage value condition, the on/off-grid controller may directly start with on-grid mode and run in on-grid mode, turn on the first switch circuit, and send the high level signal as an on-grid signal, to quickly supply power to the backup load and provide a voltage for the alternating current side of the inverter.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A backup power supply system, comprising an inverter and an on/off-grid controller, wherein the on/off-grid controller comprises a first switch circuit and a first control circuit, and the inverter comprises a second control circuit;
a grid side of the first switch circuit is connected to a power grid, an inverter side of the first switch circuit is connected to an alternating current side of the inverter, a direct current side of the inverter is configured to connect to a direct current source, and the first control circuit is connected to the second control circuit;
the first control circuit is configured to: when the on/off-grid controller is powered off, provide a low level signal for the second control circuit; and
when the on/off-grid controller is powered on, if a voltage of the power grid is greater than an undervoltage protection voltage value and a voltage on the inverter side is less than a minimum off-grid output voltage value, turn on the first switch circuit, and provide a high level signal for the second control circuit; and if the voltage of the power grid is less than or equal to the undervoltage protection voltage value or the voltage on the inverter side is greater than or equal to the minimum off-grid output voltage value, turn off the first switch circuit, and provide the low level signal for the second control circuit; and
the second control circuit is configured to: when the inverter is powered on, if a voltage on the direct current side is greater than an inverter startup voltage value, a voltage on the alternating current side is less than the minimum off-grid output voltage value, and the low level signal is received, control the inverter to run in off-grid mode; and if the voltage on the direct current side is greater than the inverter startup voltage value, the voltage on the alternating current side is greater than or equal to the minimum off-grid output voltage value, and the high level signal is received, control the inverter to run in on-grid mode.

2. The backup power supply system according to claim 1, wherein the first control circuit comprises a first control chip and a signal generation circuit;
the signal generation circuit comprises a second switch circuit and a first resistor, the second switch circuit and the first resistor are connected in series between a ground port and a signal output port, and the second switch circuit is in a turn-on state by default; and
the first control chip is configured to: when the first switch circuit is turned on, turn off the second switch circuit, to cause the signal output port to output the high level signal; and when the first switch circuit is turned off, turn on the second switch circuit, to cause the signal output port to output the low level signal.

3. The backup power supply system according to claim 2, wherein the second control circuit comprises a second control chip and a signal detection circuit;
the signal detection circuit comprises: an optocoupler, a second resistor, a first power supply, and a second power supply, wherein a first end of the optocoupler is connected to the first power supply, a second end of the optocoupler is connected to a signal input port, the signal input port is connected to the signal output port, a third end of the optocoupler is connected to the second power supply, a fourth end of the optocoupler is connected to an input end of the second control chip, and the second resistor is connected in series between the input end of the second control chip and a ground end; and
the second control chip is configured to: when the signal output port outputs the high level signal, receive a low level signal, and if the voltage on the direct current side is greater than the inverter startup voltage value and the voltage on the alternating current side is greater than or equal to the minimum off-grid output voltage value, control the inverter to run in on-grid mode; and when the signal output port outputs the low level signal, receive a high level signal, and if the voltage on the direct current side is greater than the inverter startup voltage value and the voltage on the alternating current side is less than the minimum off-grid output voltage value, control the inverter to run in off-grid mode.

4. The backup power supply system according to any one of claims 1 to 3, wherein if the voltage of the power grid is greater than the undervoltage protection voltage value and the voltage on the direct current side is greater than the inverter startup voltage value, the first control circuit is further configured to:
when the on/off-grid controller is powered on, control the on/off-grid controller to be started with on-grid mode, and if the voltage on the inverter side is less than the minimum off-grid output voltage value, turn on the first switch circuit, and send the high level signal to the second control circuit; and if the voltage on the inverter side is greater than or equal to the minimum off-grid output voltage value, turn off the first switch circuit, and send the low level signal to the second control circuit.

5. The backup power supply system according to any one of claims 1 to 4, wherein if the voltage of the power grid is greater than the undervoltage protection voltage value and the voltage on the direct current side is greater than the inverter startup voltage value, the second control circuit is further configured to:
when the inverter is powered on, receive the low level signal, control the inverter to be started with off-grid mode, and if the voltage on the alternating current side is less than the minimum off-grid output voltage value and the low level signal is received, control the inverter to run in off-grid mode; and if the voltage on the alternating current side is greater than or equal to the minimum off-grid output voltage value and the high level signal is received, control the inverter to run in on-grid mode.

6. The backup power supply system according to any one of claims 1 to 5, wherein if the voltage of the power grid is greater than the undervoltage protection voltage value and the voltage on the direct current side is less than or equal to the inverter startup voltage value, the first control circuit is further configured to:
when the on/off-grid controller is powered on, turn on the first switch circuit, and send the high level signal to the second control circuit.

7. The backup power supply system according to any one of claims 1 to 6, wherein if the voltage on the direct current side is greater than the inverter startup voltage value and the voltage of the power grid is less than or equal to the undervoltage protection voltage value, the second control circuit is further configured to:
when the inverter is powered on, control the inverter to run in off-grid mode.

8. The backup power supply system according to any one of claims 1 to 7, further comprising a power cable and a signal cable, wherein
the power cable is configured to connect the inverter side of the first switch circuit and the alternating current side of the inverter, and the signal cable is configured to connect the first control circuit and the second control circuit.

9. The backup power supply system according to any one of claims 1 to 8, wherein the on/off-grid controller comprises a first power supply port, a second power supply port, an inverter-side port, and a grid-side port, the first power supply port is configured to connect to a backup load, the second power supply port is configured to connect to a non-backup load, the inverter-side port is connected to the alternating current side of the inverter, and the grid-side port is configured to connect to the power grid; and
the first switch circuit comprises a first relay and a second relay that are connected in series, the first relay is separately connected to the first power supply port and the inverter-side port, and the second relay is separately connected to the second power supply port and the grid-side port.

10. A startup control method of a backup power supply system, comprising:
when an on/off-grid controller is powered off, providing a low level signal for a second control circuit of an inverter; and when the on/off-grid controller is powered on, if a voltage of a power grid is greater than an undervoltage protection voltage value and a voltage on an inverter side of the on/off-grid controller is less than a minimum off-grid output voltage value, turning on a first switch circuit in the on/off-grid controller, and sending a high level signal to the second control circuit; and if the voltage of the power grid is less than or equal to the undervoltage protection voltage value or the voltage on the inverter side is greater than or equal to the minimum off-grid output voltage value, turning off the first switch circuit, and sending the low level signal to the second control circuit; and
when the inverter is powered on, if a voltage on a direct current side of the inverter is greater than an inverter startup voltage value, a voltage on an alternating current side of the inverter is less than the minimum off-grid output voltage value, and the low level signal is received, controlling the inverter to run in off-grid mode; and if the voltage on the direct current side is greater than the inverter startup voltage value, the voltage on the alternating current side is greater than or equal to the minimum off-grid output voltage value, and the high level signal is received, controlling the inverter to run in on-grid mode.

11. The startup control method according to claim 10, further comprising:
if the voltage of the power grid is greater than the undervoltage protection voltage value and the voltage on the direct current side is greater than the inverter startup voltage value, when the on/off-grid controller is powered on, controlling the on/off-grid controller to be started with on-grid mode, and if the voltage on the inverter side is less than the minimum off-grid output voltage value, turning on the first switch circuit, and sending the high level signal to the second control circuit; and if the voltage on the inverter side is greater than or equal to the minimum off-grid output voltage value, turning off the first switch circuit, and sending the low level signal to the second control circuit.

12. The startup control method according to claim 10 or 11, further comprising:
if the voltage of the power grid is greater than the undervoltage protection voltage value and the voltage on the direct current side is greater than the inverter startup voltage value, when the inverter is powered on, receiving the low level signal, controlling the inverter to be started with off-grid mode, and if the voltage on the alternating current side is less than the minimum off-grid output voltage value and the low level signal is received, controlling the inverter to run in off-grid mode; and if the voltage on the alternating current side is greater than or equal to the minimum off-grid output voltage value and the high level signal is received, controlling the inverter to run in on-grid mode.

13. The startup control method according to any one of claims 10 to 12, further comprising:
if the voltage of the power grid is greater than the undervoltage protection voltage value and the voltage on the direct current side is less than or equal to the inverter startup voltage value, when the on/off-grid controller is powered on, turning on the first switch circuit, and sending the high level signal to the second control circuit.

14. The startup control method according to any one of claims 10 to 13, further comprising:
if the voltage on the direct current side is greater than the inverter startup voltage value and the voltage of the power grid is less than or equal to the undervoltage protection voltage value, when the inverter is powered on, controlling the inverter to run in off-grid mode.
